# FASCICULE DE BREVET EUROPEEN

(11) **EP 2 539 571 B1**
(45) Date de publication et mention de la délivrance du brevet: **04.01.2017**
(21) Numéro de dépôt: 11746923.9
(22) Date de dépôt: 16.02.2011
(51) Int. Cl.: F01D 25/28, G01M 15/02, F02K 9/96

(54) **BANC D'ESSAIS POUR MOTEUR À REACTION**
TESTBANK FÜR EINEN REAKTIONSMOTOR
TEST BENCH FOR A REACTION ENGINE

(30) Priorité: 24.02.2010 FR 1000744
(43) Date de publication de la demande: 02.01.2013
(73) Titulaire: SNECMA, 75015 Paris (FR)
(72) Inventeur: DAVID, Noël, F-27640 Breuilpont (FR); FIOLEK, Michel, F-27140 Conches-en-Ouche (FR); LELONG, Jacques, F-60850 Puiseux en Bray (FR); RAVIER, Nicolas, F-27200 Vernon (FR); STEPHANT, Romain, F-27200 Vernon (FR)
(74) Mandataire: Intès, Didier Gérard André
(86) Numéro de dépôt international: PCT/FR2011/050331
(87) Numéro de publication internationale: WO 2011/104465

(56) Documents cités:
- RU-C2- 2 225 527
- US-A- 3 015 231

## Description

L'invention concerne un banc d'essais pour moteur à réaction, et en particulier pour moteur fusée.

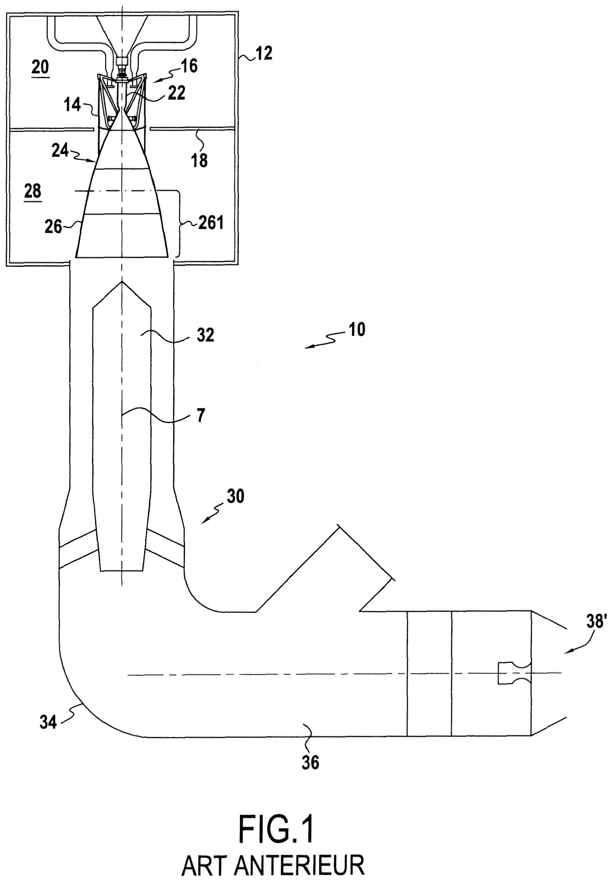

Un banc d'essais 10 de ce type est présenté par la figure 1. Il comporte une enceinte 12 équipée de moyens de maintien en position 14 pour maintenir en position un moteur à réaction 16 soumis à des essais, et en particulier le divergent 26 de la tuyère 24 de celui-ci. L'enceinte 12 est séparée en deux parties par un plancher horizontal 18. La partie haute forme une chambre de moteur 20 dans laquelle se trouve le corps 22 du moteur 16 et une petite partie de sa tuyère 24.

Afin que le moteur 16 et sa tuyère 24 soient placés dans une configuration similaire à leurs conditions de fonctionnement normales, ils sont disposés suivant un axe vertical ; en outre, la tuyère 24 est fixée sur le moteur comme en fonctionnement normal.

La tuyère 24 est constituée par une petite partie sensiblement cylindrique en amont prolongée par le divergent 26, de forme sensiblement conique et d'axe vertical Z. Le divergent est la partie de la tuyère située, dans le sens normal de circulation des gaz, en aval de la section de plus petit diamètre de la tuyère. La plus grande partie du divergent 26 se trouve dans la chambre basse 28 située sous la chambre haute 20, les chambres 20 et 28 constituant l'enceinte 12.

Pendant les essais de fonctionnement, le moteur 16 permet la combustion du carburant et du comburant dans une chambre de combustion non représentée, et éjecte des gaz de combustion via sa tuyère 24. Les gaz de combustion se détendent et accélèrent au cours de leur passage dans le divergent 26.

Le moteur 16 et notamment sa tuyère 24 sont disposés suivant la direction verticale dans la chambre 12. Le moteur passe à travers une ouverture formée dans le plancher 18.

De plus, une large ouverture est formée dans la paroi inférieure de la chambre basse 28. Cette ouverture permet le passage de l'extrémité du divergent 26, et l'évacuation des gaz de combustion vers un canal 30 d'évacuation des gaz.

Ce canal 30 comporte une première partie verticale située dans le prolongement du divergent 26 et dans laquelle les gaz éjectés par le moteur 16 s'engouffrent pendant les essais de fonctionnement du moteur. Ces gaz sont tout d'abord freinés par un brise-jet 32 disposé dans le canal 30, qui se présente comme un élément cylindrique prolongé en amont par une pointe conique.

En aval de ce brise-jet 32, le canal forme un coude 34 à angle droit au-delà duquel il se prolonge par une section horizontale 36.

La sortie des gaz se fait au niveau d'une ouverture de sortie 38 située en aval de la section 36. D'autres exemples de banc d'essais pour moteur de fusée sont décrits par les documents RU2225527 et US3015231.

L'invention vise en particulier à améliorer un banc d'essai de simulation d'altitude, tel que le banc représenté en figure 1. Dans ce banc, l'enceinte 12 qui est prévue pour accueillir le corps du moteur 16, est agencée de manière suffisamment étanche pour permettre l'établissement d'une pression inférieure à 200 mBar, voire 50 mBar, autour du corps du moteur 16 au cours des essais.

Cette pression inférieure à la pression atmosphérique est créée de manière connue à l'intérieur de l'enceinte 12 par le propre jet des gaz de combustion éjectés par le moteur 16, en association avec un système de trompes à eau.

Au cours d'essais de moteur sur de tels bancs d'essais, des dégradations des moteurs allant jusqu'à la rupture de la tuyère des moteurs, de leurs chambres de combustion et des moyens de maintien en position du divergent sur le banc ont pu être constatées sur des moteurs soumis à des tests de fonctionnement.

L'objectif de l'invention est de proposer un banc d'essais d'un moteur à réaction ayant une tuyère présentant un divergent,
le banc comportant des moyens de maintien en position du divergent, aptes à maintenir le divergent de telle sorte que son axe soit vertical, banc dans lequel le risque d'endommagement voire de destruction du moteur soit réduit voire supprimé.

Cet objectif est atteint grâce au fait que lesdits moyens sont aptes à interagir avec une partie aval du divergent située dans la moitié aval de celui-ci, afin de limiter une déformation et/ou un déplacement de cette partie aval. Ces moyens visent notamment à empêcher des déformations et/ou déplacement plus particulièrement dans une direction transverse à l'axe Z du divergent.

Dans certains modes de réalisation, les moyens de maintien en position du divergent sont aptes plus précisément à interagir avec une partie du divergent située dans le tiers, voire le quart le plus en aval de celui-ci.

Naturellement, en plus des moyens de maintien en position du divergent aptes à interagir avec une partie aval du divergent située dans la moitié aval de celui-ci, le banc peut présenter d'autres moyens de maintien en position du divergent, aptes à interagir quant à eux avec la moitié amont du divergent.

En effet, au cours des essais et notamment en analysant les circonstances ayant conduit à l'endommagement des moteurs d'essais, il est apparu que cet endommagement peut se produire au moment même de l'arrêt de l'essai, très peu de temps après la coupure de l'alimentation du moteur soumis à essai.

Pendant l'essai, un écoulement en régime stationnaire se forme à l'intérieur de la tuyère du moteur et du canal d'évacuation des gaz. Cet écoulement fait descendre la pression dans le divergent 26 et la chambre 12 à une valeur très basse (typiquement de l'ordre de 25 mBar), cette dépressurisation de l'enceinte 12 étant engendrée de manière connue par l'éjection des gaz de combustion.

Lorsque l'alimentation du moteur 16 est coupée, l'analyse a pu montrer que la remontée en pression se fait par le biais d'une onde de remontée en pression ou de recompression se propageant à contre-courant du flux de gaz et remontant dans le canal d'éjection 30 depuis sa sortie jusqu'à l'intérieur du divergent 26.

Or, il est apparu en particulier qu'une asymétrie même légère du canal d'éjection, par rapport au divergent, conduit à une remontée en pression également asymétrique à l'intérieur du divergent. Dès lors qu'elle présente une asymétrie, l'onde de recompression engendre des efforts transversaux s'appliquant sur le divergent au moment de l'arrêt de l'essai de fonctionnement du moteur 16. L'hypothèse a donc été faite que ce sont ces efforts transversaux qui seraient à l'origine des endommagements et destructions de moteurs cités précédemment, la partie aval du divergent, du fait de sa surface importante, et de sa distance par rapport au corps du moteur, étant particulièrement susceptible d'être endommagée par des efforts transversaux s'exerçant sur le divergent.

En effet, les moyens de maintien habituels utilisés pour maintenir les moteurs à réaction soumis à essais sont situés en partie amont de la tuyère, et plus précisément dans une partie amont occupant seulement le premier quart amont du divergent. Ces moyens ne peuvent donc pas maintenir efficacement la partie aval du divergent, en cas d'application d'efforts transversaux sur celle-ci.

Selon l'invention inversement, des moyens de maintien en position sont disposés dans le banc d'essai de manière à pouvoir interagir avec la partie aval du divergent. Ils apportent donc un maintien efficace pour empêcher déformation et/ou déplacement du divergent au moment de l'arrêt de l'essai. Ce sont donc ces moyens de maintien en position qui supportent la majeure partie des efforts transversaux générés par l'onde de recompression, plutôt que la structure propre du moteur, qui n'est pas dimensionnée pour les supporter.

Dans un mode de réalisation, lesdits moyens de maintien en position comportent une structure anti-ovalisation, par exemple en forme d'anneau, comportant des portions disposées sur un cercle autour du divergent et aptes à entrer en contact avec celui-ci pour empêcher son ovalisation. Une telle structure est définie ici pour un divergent de section circulaire, ce qui est le cas général ; mais son principe pourrait être étendu à des divergents ayant une section transversale non-circulaire. On comprend que la structure anti-ovalisation doit être une structure rigide, apte à limiter les déformations du divergent et à le contraindre à conserver une forme circulaire (au moins à l'endroit des points de contact entre le divergent et la structure anti-ovalisation).

Le fonctionnement de la structure anti-ovalisation est le suivant : Un premier effet de l'onde de recompression est de déformer de manière non circulaire la partie aval du divergent. Dans ce mode de réalisation, les moyens de maintien sont agencés pour assurer le maintien de la circularité du divergent. Si le divergent (au droit de la structure anti-ovalisation) se déforme de manière à perdre sa forme circulaire, il entre en contact avec la structure anti-ovalisation, qui bloque ou du moins limite la déformation du divergent et ainsi empêche ou du moins limite à une valeur acceptable la déformation du divergent.

Pour que cette action soit efficace, il est préférable que la structure anti-ovalisation soit de diamètre presque égal au diamètre extérieur du divergent. Or, en cours d'essai le divergent peut être amené à se déplacer dans le plan perpendiculaire à son axe, soit du fait de vibrations, soit du fait de dilatations thermiques, entrainant un déplacement du divergent dans une direction ou une autre.

Pour permettre de tels déplacements, dans un mode de réalisation, ladite structure est libre de se déplacer perpendiculairement à l'axe du divergent, dans un intervalle, par rapport à une partie fixe du banc, de telle sorte que cette structure accompagne sans les brider les déplacements transversaux de faible amplitude du divergent au cours des essais. On comprend ici que les déplacements transversaux sont de faible amplitude s'ils se produisent dans l'intervalle cité précédemment. Cet intervalle est limité par des moyens de limitation de déplacement (butées, etc.).

L'invention peut bénéficier avantageusement des différents perfectionnements suivants, seuls ou en combinaison :
- les moyens de maintien en position peuvent comporter au moins un limiteur de déplacement latéral, apte à limiter un déplacement transversal du divergent, c'est-à-dire dans une direction perpendiculaire à l'axe de celui-ci ;
- ledit au moins un limiteur de déplacement latéral peut être apte à entrer en contact soit directement avec le divergent, soit avec la structure anti-ovalisation citée précédemment, pour limiter ledit déplacement latéral du divergent.
- ledit au moins un limiteur de déplacement latéral peut comporter un système d'amortissement pour dissiper une énergie cinétique de déplacement latéral du divergent, le système d'amortissement pouvant comprendre par exemple un élément frottant ou un vérin.

Un deuxième objectif de l'invention est de proposer un ensemble comportant un banc d'essais, et un moteur à soumettre à essais, ledit moteur étant un moteur à réaction ayant une tuyère présentant un divergent, ensemble dans lequel le risque d'endommagement voire de destruction du moteur soit réduit voire supprimé. Cet objectif est atteint grâce au fait que le banc d'essais est conforme au banc d'essai présenté précédemment.

Dans un mode de réalisation d'un tel ensemble, lorsque le moteur est à l'arrêt, la moitié aval du divergent est sans contact avec lesdits moyens de maintien en position aptes à interagir avec une partie aval du divergent située dans la moitié aval de celui-ci. Naturellement, le divergent peut être maintenu par ailleurs par d'autres moyens de maintien en position, mais interagissant uniquement avec la moitié amont de celui-ci.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique en coupe axiale d'un banc d'essais selon un mode de réalisation connu ;
- la figure 2 est une coupe suivant une direction radiale du divergent d'un moteur d'essais, d'un banc d'essais selon l'invention ;
- les figures 3 et 4 sont des schémas de principe illustrant le fonctionnement et l'agencement des moyens de maintien en position du banc d'essai de la figure 2 ;
- la figure 5 est une représentation schématique en perspective partielle du banc d'essais de la figure 1 ;
- la figure 6 est une coupe perpendiculaire à l'axe du divergent, d'un banc d'essais de moteur suivant un deuxième mode de réalisation de l'invention.

L'invention peut être mise en oeuvre dans un banc d'essai tel que celui représenté sur la figure 1. Pour cela, des moyens supplémentaires doivent être prévus pour le maintien en position du divergent.

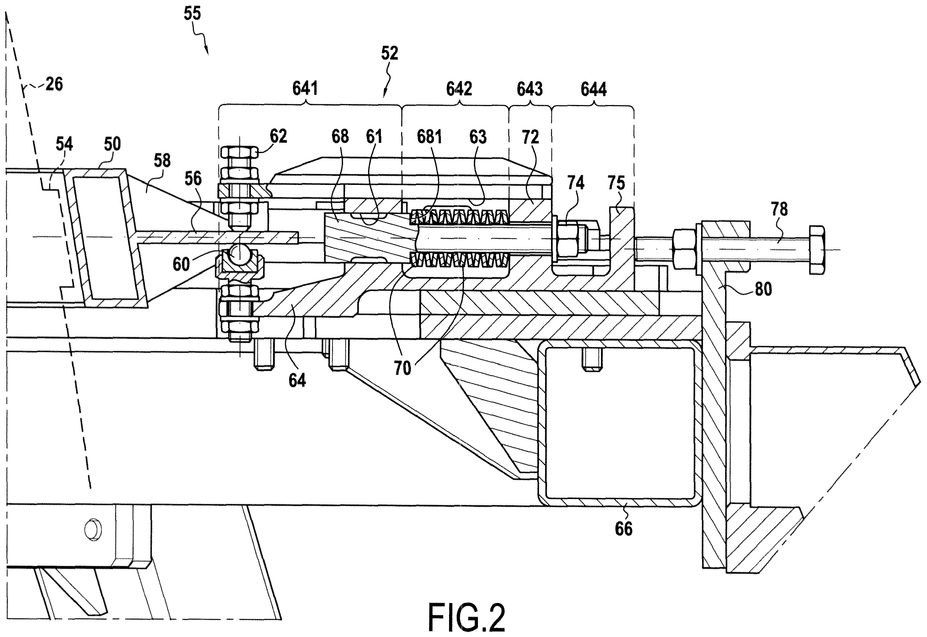

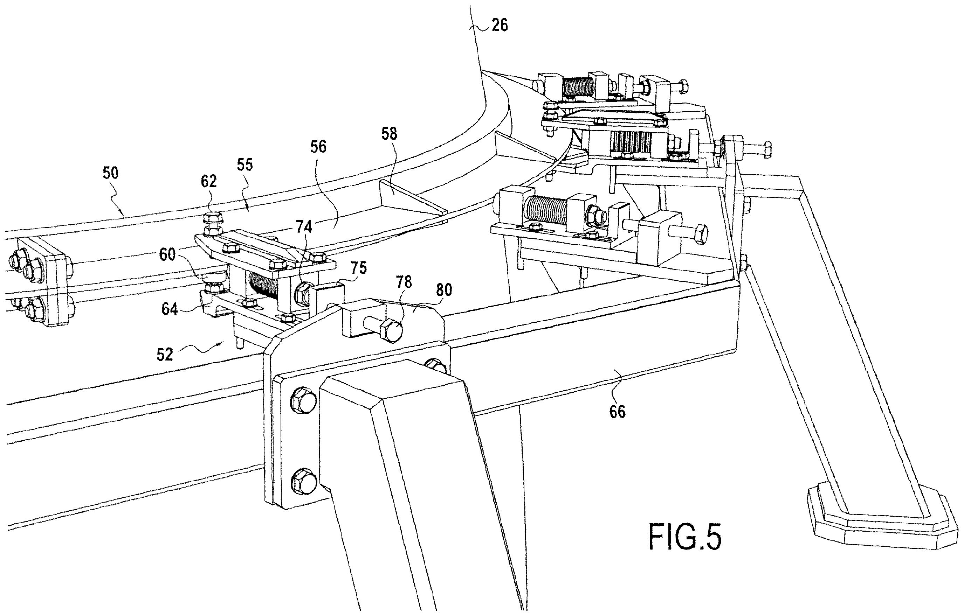

De tels moyens sont présentés sur les figures 2 et 5. Ces moyens comportent principalement un anneau flottant 50 de même axe que le divergent 26, et des limiteurs de déplacement 52 pour limiter les déplacements de l'anneau 50 et donc du divergent 26. L'axe du divergent étant disposé suivant la direction verticale, les déplacements transversaux du divergent 26 sont des déplacements horizontaux.

L'anneau 50 a une forme générale circulaire. Il présente une section creuse, dont la paroi disposée face au divergent est parallèle à la paroi extérieure de celui-ci. De préférence, l'anneau est placé à la hauteur d'une nervure de renfort 54 du divergent. A l'intérieur de l'anneau circule un fluide de refroidissement, qui sert à maintenir l'anneau à une température acceptable en fonction de son matériau.

Les surfaces de contact entre l'anneau (en tant que structure anti-ovalisation) et le divergent sont de forme sensiblement tronconique, de manière à épouser la forme de la surface extérieure du divergent.

Sur la paroi radialement extérieure de l'anneau est fixée une nervure de rigidification 56. Celle-ci est une partie de plaque plane, en forme de rondelle de grandes dimensions, et sert à empêcher toute déformation de l'anneau dans le plan horizontal, qui permettrait que le divergent subisse une déformation non-circulaire et par suite l'apparition de contraintes dans son matériau. La nervure 56 est fixée à l'anneau 50 par un ensemble d'équerres 58, chacune étant placée dans un plan méridien par rapport à l'axe Z. L'anneau 50, la nervure 56 et les équerres 58 constituent ainsi une structure anti-ovalisation 55.

L'anneau 50 est maintenu en position par les limiteurs de déplacement 52, qui servent à la fois de limiteur de déplacement vertical et latéral.

Ces limiteurs 52 sont répartis angulairement régulièrement sur la circonférence de la nervure 56, à raison d'un limiteur tous les 10°.

L'anneau 50 est maintenu à une hauteur qui lui permet d'interagir avec une partie aval 261 du divergent 26 située dans la moitié aval de celui-ci et ainsi, de limiter une déformation et/ou un déplacement de cette partie aval du divergent.

Pour supporter l'anneau 50 suivant la direction verticale, chacun des limiteurs de déplacement 52 comporte une bille 60 disposée sous la nervure 56. La nervure 56, et avec elle, l'anneau 50 sont ainsi supportés mécaniquement suivant la direction verticale par l'ensemble des billes 60.

Par ailleurs, les déplacements vers le haut de la nervure 56 sont contenus par des contre-vis réglables 62, dont une partie des limiteurs de déplacement sont équipés (Il n'est pas nécessaire d'équiper tous les limiteurs 52, du fait que le poids de l'anneau tend naturellement à maintenir celui-ci contre les billes 60).

La nervure 56 et donc l'anneau flottant 50 sont donc astreints à ne se déplacer que dans un plan horizontal. Les billes 60 sont sensiblement libres en rotation, ce qui permet que l'anneau 50 et la nervure 56 puissent se déplacer librement, dans certaines limites, suivant une direction horizontale.

Les billes 60, ainsi que les contre-vis 62, sont fixés directement ou par via des pièces intermédiaires sur le corps 64 des limiteurs de déplacement 52. Les limiteurs 52 sont eux-même fixés sur une structure de support 66 mécano-soudée fixée dans la chambre basse 28 banc d'essais.

D'autre part, les déplacements horizontaux de l'anneau flottant 50 sont limités par les limiteurs de déplacement 52, dans leur rôle de limiteurs de déplacement latéral. Chacun de ceux-ci comporte une butée 68 en matériau élastique, disposée horizontalement au droit de la nervure 56.

La butée 68 a une forme globalement cylindrique. Elle est montée de manière coulissante à l'intérieur du limiteur 52 dans la direction radiale par rapport au divergent 26.

Pour permettre le maintien de la butée 68, le limiteur de déplacement 52 comporte quatre parties échelonnées radialement.

Dans la première partie 641 (radialement interne), le corps 64 assure le maintien (directement ou non) de la bille 60 et de la contre-vis (le cas échéant) 62. Il comporte de plus un alésage 61 dans lequel coulisse avec un faible jeu la butée 68, et qui permet de guider les déplacements de celle-ci suivant la direction radiale.

Dans la deuxième partie 642, le corps 64 comporte une chambre 63 dans laquelle la butée 68 passe sans contact. Les dimensions internes de cette chambre permettent qu'un ensemble de rondelles Belleville 70 soient disposées autour de la butée 68, dans cette chambre.

Du côté radialement interne de la chambre précitée, la butée 68 comporte un épaulement 681 qui empêche les déplacements des rondelles 70 vers l'intérieur.

Dans la troisième partie 643, la butée 68 passe à travers un passage formé dans une paroi 72 perpendiculaire à la direction radiale du corps 64, passage qui contribue à guider la butée 68 lors de ses déplacements radiaux.

La quatrième partie 644 est située radialement au niveau de l'extrémité de la butée 68, et sert à maintenir une butée externe 78, dont le fonctionnement sera décrit plus loin.

Mais avant cela, il convient de préciser le fonctionnement de la butée 68 du limiteur de déplacement 52.

L'extrémité radialement externe de la butée 68 comporte un filetage extérieur sur lequel est vissé un écrou 74. Les rondelles 70 sont comprimées entre la paroi 72 et l'épaulement 681 de la butée 68. Aussi, en temps normal, elles tendent à déplacer la butée 68 vers l'intérieur, vers l'axe du divergent, jusqu'à mettre en contact l'écrou 74 avec la paroi 72.

Inversement au cours des essais du moteur, si le divergent 26 se déplace latéralement (horizontalement), dans le sens qui fait entrer en contact la nervure 56 avec la butée 68, la nervure 56 appuie sur l'extrémité radialement intérieure de la butée et tend à déplacer la butée vers l'extérieur, comprimant ainsi les rondelles 70. La butée 68, et plus généralement le limiteur 52, freine et bloque le déplacement de l'anneau 50 et du divergent 26.

Les rondelles Belleville 70 constituent un système d'amortissement, qui stocke une partie de l'énergie cinétique sous forme élastique, mais en dissipe également une partie lors des interactions entre les rondelles. D'autres systèmes d'amortissement naturellement peuvent être utilisés tout en restant dans le cadre de l'invention.

Si la poussée du divergent est particulièrement forte, le déplacement de la butée 68 est limité par une deuxième butée, externe (butée fixe) 78, à laquelle la butée 68 se heurte si son déplacement n'a pu être contenu par les rondelles 70. Cette butée fixe 78 se présente sous la forme d'une tige radiale, qui est comme le limiteur 52 fixée rigidement à la structure de support 66, au moyen d'un support 80. Sa position radiale est réglable par rapport au support 80.

La partie radialement externe 644 du corps 64 du limiteur 52 comporte une paroi verticale 75, présentant un passage à travers lequel passe la butée externe 78. Ce passage permet de guider la butée externe 78 et d'assurer qu'au moment où la butée 68 est repoussée vers l'extérieur par l'anneau 50 et la nervure 56, elle entre bien en contact avec la butée externe 78.

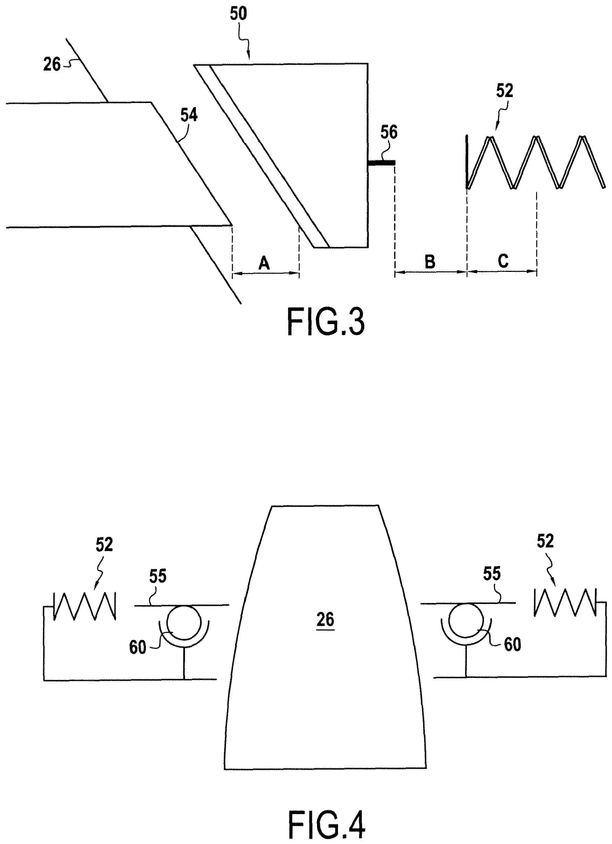

Les figures 3 et 4 précisent le comportement mécanique des moyens de maintien en position qui ont été présentés précédemment, à savoir essentiellement la structure anti-ovalisation 55, et les limiteurs de déplacement 52.

Le divergent est monté avec un jeu radial A, qui est de préférence relativement faible, à l'intérieur de la structure anti-ovalisation 55. Ce jeu permet notamment des variations de taille du divergent au cours des essais, due à des dilatations / rétractations thermiques.

La structure anti-ovalisation 55 est montée flottante sur les billes 60, ce qui signifie qu'elle peut se déplacer sensiblement librement, dans le plan horizontal, dans certaines limites naturellement. Pour cela, un jeu B est prévu entre la structure anti-ovalisation et les limiteurs de déplacement 52. Aussi, lorsque (ou au cas où) le divergent se déplace latéralement en cours d'essais, du fait de dilatations thermiques différentielles, la structure anti-ovalisation 55 se déplace avec le divergent sans générer de contraintes mécaniques dans celui-ci. Le déplacement est limité naturellement à la somme des jeux A et B.

Enfin, grâce à l'emploi de limiteurs 52 équipés d'un système d'amortissement (rondelles 70), les déplacements du divergent et de la structure anti-ovalisation peuvent être contenus de manière relativement élastique, cela afin d'éviter les chocs et de ne pas endommager le divergent 26, voire le moteur lui-même. Les limiteurs de déplacement permettent donc un déplacement complémentaire C, dans la direction radiale, au-delà duquel le déplacement est définitivement stoppé, au moyen des butées externes 78 citées précédemment.

En pratique, les jeux A, B et C ont des valeurs de 12 mm, 15 mm et 5 mm respectivement, pour un diamètre de divergent de l'ordre de 2 mètres.

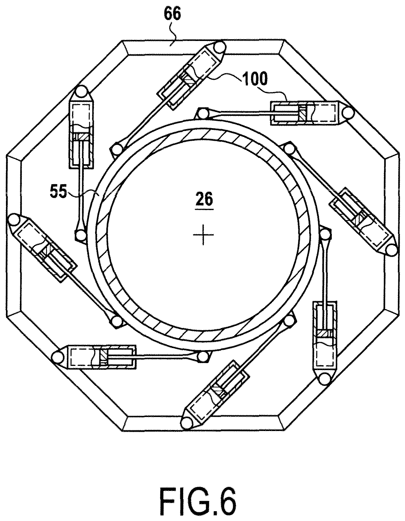

La figure 6 présente un autre mode de réalisation des limiteurs de déplacement, dans lequel :
- les déplacements verticaux sont contenus par des billes 60 et des contre-vis 62 identiques à ce qui a été présenté précédemment (non représentées) ; et
- les déplacements transversaux sont contenus par des vérins double-effet 100, en l'occurrence des vérins à laminage d'huile de type « Dashpot ».

Chacun de ces vérins est alors fixé à son extrémité radialement externe, à une partie fixe du banc d'essais (dans cet exemple, la structure de support 66), et à son extrémité radialement interne, à la structure anti-ovalisation 55 (soit à la nervure 56, soit directement à l'anneau 50). Ces vérins peuvent être soit disposés dans la direction radiale, soit, avec sensiblement le même résultat, suivant des directions transversales obliques par rapport à la direction radiale, comme cela apparaît sur la figure 6. Ce dernier agencement permet avantageusement de réduire l'encombrement total des moyens de maintien en position du divergent et par suite, du banc d'essais.

## Revendications

1. Banc d'essais d'un moteur à réaction (16) ayant une tuyère (24) présentant un divergent (26),
le banc comportant des moyens de maintien en position du divergent aptes à maintenir le divergent de telle sorte que son axe soit vertical, le banc **se caractérisant en ce que** lesdits moyens (55,52,66) sont aptes à interagir avec une partie aval (261) du divergent située dans la moitié aval de celui-ci, afin de limiter une déformation et/ou un déplacement de cette partie aval.

2. Banc d'essais selon la revendication 1, dans lequel lesdits moyens de maintien en position comportent une structure anti-ovalisation (55), par exemple en forme d'anneau (50), comportant des portions disposées sur un cercle autour du divergent (26) et aptes à entrer en contact avec celui-ci pour empêcher son ovalisation.

3. Banc d'essais selon la revendication 2, dans lequel ladite structure (55) est libre de se déplacer perpendiculairement à l'axe du divergent, dans un intervalle, par rapport à une partie fixe du banc (66), de telle sorte que cette structure (55) accompagne sans les brider les déplacements transversaux de faible amplitude du divergent (26) au cours des essais.

4. Banc d'essais selon la revendication 2 ou 3, dans lequel la structure anti-ovalisation présente des surfaces de contact entre ladite structure (55) et le divergent (26) de forme sensiblement tronconique, de manière à épouser la forme de la surface extérieure du divergent.

5. Banc d'essais selon l'une quelconque des revendications 1 à 4, dont les moyens de maintien en position comportent au moins un limiteur de déplacement latéral (52), apte à limiter un déplacement transversal du divergent (26).

6. Banc d'essais selon la revendication 5 et l'une quelconque des revendications 2 à 4, dans lequel ledit au moins un limiteur de déplacement latéral (52) est apte à entrer en contact avec ladite structure anti-ovalisation (55) pour limiter ledit déplacement latéral du divergent.

7. Banc d'essais selon la revendication 5 ou 6, dans lequel ledit au moins un limiteur de déplacement latéral comporte un système d'amortissement (70) pour dissiper une énergie cinétique de déplacement latéral du divergent, le système d'amortissement comprenant par exemple un élément frottant (70) ou un vérin (100).

8. Banc d'essais selon l'une quelconque des revendications 1 à 7, agencé pour permettre l'établissement d'une pression inférieure à 200 mBar, voire 50 mBar, autour d'un corps du moteur (16) au cours des essais.

9. Banc d'essais selon l'une quelconque des revendications 1 à 8, comportant une enceinte (12) apte à accueillir un corps du moteur (16) et agencée de manière suffisamment étanche pour permettre l'établissement d'une pression inférieure à 200 mBar, voire 50 mBar, autour dudit corps du moteur (16) au cours des essais.

10. Ensemble comportant un banc d'essais selon l'une quelconque des revendications 1 à 9, et un moteur (16) à soumettre à essais, ledit moteur étant un moteur à réaction (16) ayant une tuyère (24) présentant un divergent (26).

11. Ensemble selon la revendication 10, dans lequel lorsque le moteur est à l'arrêt, la moitié aval du divergent est sans contact avec lesdits moyens de maintien en position du divergent aptes à interagir avec une partie aval du divergent située dans la moitié aval de celui-ci.

## Patentansprüche

1. Testbank für einen Reaktionsmotor (16) mit einem Rohr (24), das eine Erweiterung (26) aufweist,
wobei die Bank Mittel zum Halten der Erweiterung in Position umfasst, die geeignet sind, die Erweiterung derart zu halten, dass ihre Achse vertikal ist, wobei die Bank **dadurch gekennzeichnet ist, dass** die Mittel (55, 52, 66) geeignet sind, mit einem stromabwärtigen Teil (261) der Erweiterung, der sich in der stromabwärtigen Hälfte derselben befindet, zusammenzuwirken, um eine Verformung und/oder eine Verschiebung dieses stromabwärtigen Teils zu begrenzen.

2. Testbank nach Anspruch 1, bei der die Positionshaltemittel eine Struktur (55) zur Verhinderung von Unrundheit beispielsweise in Form eines Ringes (50) umfasst, die Abschnitte aufweist, die auf einem Kreis um die Erweiterung (26) angeordnet und geeignet sind, mit dieser in Kontakt zu treten, um ihre Unrundheit zu verhindern.

3. Testbank nach Anspruch 2, bei der sich die Struktur (55) frei senkrecht auf die Achse der Erweiterung in einem derartigen Bereich in Bezug zu einem festen Teil der Bank (66) bewegen kann, dass diese Struktur (55) die Querbewegungen von geringer Amplitude der Erweiterung (26) während der Tests begleitet, ohne sie einzuschränken.

4. Testbank nach Anspruch 2 oder 3, bei der die Struktur zur Verhinderung von Unrundheit Kontaktflächen zwischen der Struktur (55) und der Erweiterung (26) von im Wesentlichen kegelstumpfartiger Form aufweist, um sich an die Form der Außenfläche der Erweiterung anzupassen.

5. Testbank nach einem der Ansprüche 1 bis 4, deren Positionshaltemittel mindestens einen seitlichen Bewegungsbegrenzer (52) umfassen, der geeignet ist, eine Querbewegung der Erweiterung (26) zu begrenzen.

6. Testbank nach Anspruch 5 und einem der Ansprüche 2 bis 4, bei der der mindestens eine seitliche Bewegungsbegrenzer (52) geeignet ist, mit der Struktur (55) zur Verhinderung von Unrundheit in Kontakt zu treten, um die seitliche Bewegung der Erweiterung zu begrenzen.

7. Testbank nach Anspruch 5 oder 6, bei der der mindestens eine seitliche Bewegungsbegrenzer ein Dämpfungssystem (70) umfasst, um eine kinetische seitliche Bewegungsenergie der Erweiterung abzubauen, wobei das Dämpfungssystem beispielsweise ein Reibungselement (70) oder einen Zylinder (100) umfasst.

8. Testbank nach einem der Ansprüche 1 bis 7, die dazu vorgesehen ist, die Herstellung eines Drucks unter 200 mBar, sogar 50 mBar, um einen Körper des Motors (16) während der Tests zu ermöglichen.

9. Testbank nach einem der Ansprüche 1 bis 8, umfassend einen Raum (12), der geeignet ist, einen Körper des Motors (16) aufzunehmen, und der ausreichend dicht vorgesehen ist, um die Herstellung eines Drucks unter 200 mBar, sogar 50 mBar, um den Körper des Motors (16) während der Tests zu ermöglichen.

10. Einheit, umfassend eine Testbank nach einem der Ansprüche 1 bis 9, und einen Motor (16), der Tests unterzogen werden muss, wobei der Motor ein Reaktionsmotor (16) mit einem Rohr (24) ist, das eine Erweiterung (26) aufweist.

11. Einheit nach Anspruch 10, bei der, wenn der Motor abgestellt ist, die stromabwärtige Hälfte der Erweiterung ohne Kontakt mit den Mitteln zum Halten der Erweiterung in Position ist, die geeignet sind, mit einem stromabwärtigen Teil der Erweiterung zusammenzuwirken, der sich in der stromabwärtigen Hälfte derselben befindet.

## Claims

1. A test bench for a reaction engine (16) having a nozzle (24) having a divergent (26),
the bench comprising means for holding the divergent in position capable of holding the divergent so that its axis is vertical, the bench being **characterized in that** said means (55, 52, 66) are capable of interacting with a downstream portion (261) of the divergent located in the downstream half thereof, in order to limit distortion and/or displacement of this downstream portion.

2. The test bench according to Claim 1, wherein said means for holding in position comprise an anti-ovalization structure (55), having for example the shape of a ring (50), comprising portions arranged in a circle around the divergent (26) and capable of coming into contact with the divergent to prevent an ovalization thereof.

3. The test bench according to Claim 2, wherein said structure (55) is free to move perpendicularly to the axis of the divergent, within an interval, with respect to a fixed portion of the bench (66), such that this structure (55) follows small-amplitude displacements of the divergent (26) during testing without snubbing them.

4. The test bench according to Claim 2 or 3, wherein the anti-ovalization structure has contact surfaces between said structure (55) and the divergent (26) having a substantially truncated shape, so as to fit the shape of the outer surface of the divergent.

5. The test bench according to any one of Claims 1 to 4, wherein the means for holding in position comprise at least one lateral displacement limiter (52) capable of limiting a transverse displacement of the divergent (26).

6. The test bench according to Claim 5 and any one of Claims 2 to 4, wherein said at least one lateral displacement limiter (52) is capable of coming into contact with said anti-ovalization structure (55) so as to limit said lateral displacement of the divergent.

7. The test bench according to Claim 5 or 6, wherein said at least one lateral displacement limiter comprises a damping system (70) for dissipating kinetic energy of lateral displacement of the divergent, the damping system including for example a friction element (70) or a cylinder (100).

8. The test bench according to any one of Claims 1 to 7, arranged so as to allow the establishment of a pressure below 200 mBar, or even 50 mBar, around the body of an engine (16) during testing.

9. The test bench according to any one of Claims 1 to 8, comprising an enclosure (12) capable of accommodating a body of the engine (16) and made sufficiently airtight to allow the establishment of a pressure below 200 mBar, or even 50 mBar, around said body of the engine (16) during testing.

10. An assembly comprising a test bench according to any one of Claims 1 to 9, and an engine (16) to be subjected to testing, said engine being a reaction motor (16) having a nozzle (24) having a divergent (26).

11. An assembly according to Claim 10 wherein, when the engine is stopped, the downstream half of the divergent is not in contact with said means for holding the divergent in position capable of interacting with a downstream portion of the divergent located in the downstream half thereof.
